# EUROPÄISCHE PATENTSCHRIFT

(11) **EP 0 689 523 B1**
(45) Veröffentlichungstag und Bekanntmachung des Hinweises auf die Patenterteilung: **27.11.1996**
(21) Anmeldenummer: 94910411.1
(22) Anmeldetag: 11.03.1994
(51) Int. Cl.: C02F 3/30, C02F 3/06

(54) **Verfahren zur Reinigung von Abwasser,insbesondere kommunalem Abwasser**
Process for the purification of waste water,in particular communal waste water
Procédé de purification des eaux usées, en particulier des eaux usées communales

(30) Priorität: 15.03.1993 DE 4308156
(43) Veröffentlichungstag der Anmeldung: 03.01.1996
(73) Patentinhaber: PHILIPP MÜLLER GmbH, 70191 Stuttgart (DE)
(72) Erfinder: STROHMEIER, Andreas, D-71229 Leonberg (DE); SCHROETER, Ingulf, D-70376 Stuttgart (DE); ROVEL, Jean-Marie, F-72500 Rueil-Malmaison (FR)
(74) Vertreter: Dreiss, Uwe, Prof. Dr. jur. Dipl.-Ing. M.Sc.
(86) Internationale Anmeldenummer: EP9400765
(87) Internationale Veröffentlichungsnummer: WO9421568

(56) Entgegenhaltungen:
- EP-A- 0 456 607
- EP-A- 0 543 457
- WO-A-92/04284
- DE-A- 3 933 513
- US-A- 4 826 601
- HELMER/SEKOULOV 'WEITERGEHENDE ABWASSERREINIGUNG' 1977 , DEUTSCHER FACHSCHRIFTEN-VERLAG , MAINZ-WIESBADEN * Seite 49, 2.4.2 Bemessungsmethoden - Seite 52 * * Seite 54, Abbildung 9, Schema D, Festbett-Reaktoren * * Seite 57, 2.5. Stickstoffelimination in Festbettreaktoren - Seite 64, Absatz 2
- G. RHEINEIMER ET AL. 'STICKSTOFFKREISLAUF IM WASSER' 1988 , R.OLDENBOURG VERLAG , MÜNCHEN WIEN * Seite 323, 3.2.3 Zweistufige Belebungsanlagen - Seite 330, Absatz 1 * * Seite 261, 3.2.1.1 Kohlenstoffaabau und Nitrifikation - Seite 269 *
- GWF WASSER ABWASSER Bd. 130, Nr. 5 , Mai 1989 , MUNCHEN DE Seiten 229 - 234 NOLTING B. 'UNTERSUCHUNGEN ZUR BEDEUTUNG DER SÄUREKAPAZITÄT BEI BELEBUNGSANLAGEN MIT NITRIFIKATION UND SIMULTANFÄLLUNG'

## Beschreibung

Die Erfindung betrifft ein Verfahren für die Reinigung von Abwasser, insbesondere kommunalem Abwasser mit einer mechanischen Reinigungsstufe, einer ersten biologischen Reinigungsstufe und einer zweiten biologischen Reinigungsstufe, bei der die zweite biologische Reinigungsstufe eine biologische Filteranlage ist, die eine Filterstufe für die Nitrifikation und einen in Strömungsrichtung nachgeschaltete Filterstufe für die Denitrifikation aufweist, wobei die Filterstufen mindestens einen biologischen Filter aufweisen.

Ein derartiges Verfahren ist aus der DE 39 33 513 bekannt. Bei der dort vorgesehenen ersten biologischen Reinigungsstufe handelt es sich um zwei hintereinander geschaltete Schwachlastbelebungsbecken, denen - als zweite biologische Reinigungsstufe - eine biologisch intensivierte Filteranlage zur Nitrifizierung und zur Denitrifizierung nachgeschaltet sind. Die Nachschaltung der die zweite biologische Reinigungsstufe bildenden Filter für Nitrifizierung und Denitrifizierung soll den Raum- und Flächenbedarf der vorgeschalteten Schwachlastbelebungsstufe und gleichzeitig Mikroverschmutzungen im Ablauf reduzieren (siehe DE 39 33 513 A1, Sp. 2, Z. 18 bis 24 und Sp. 3, Z. 49 bis 53). In der DE 39 33 513 A1 wird ausdrücklich auf eine kurz vorher eingereichte Patentanmeldung desselben Anmelders und Erfinders, nämlich auf die DE 39 16 679 A1 Bezug genommen (vgl. DE 39 33 513 A1, Sp. 2, Z. 6). Auch darin ist erwähnt, daß die erste biologische Reinigungsstufe eine Schwachlastbelebungsstufe ist; in der DE 39 16 679 A1 ist dann ferner im Zusammenhang mit einem Beispiel angegeben (Sp. 4, Z. 57), daß die Stickstoffracht bis auf einen Gehalt von 10 mg/l abgebaut wird.

Unter einer Schwachlastbelebungsstufe versteht man eine Anlage mit einer Schlammbelastung von weniger als 0,1 kg BSB/kg Schlamm und Tag. Dies ist eine in der Fachwelt gebräuchliche Bezeichnung (vgl. Degrémont Handbuch Wasseraufbereitung Abwasserreinigung, Bauverlag Wiesbaden und Berlin, S. 344).

Geht man von diesem Verständnis des in der DE 39 16 679 A1 und der DE 39 33 513 A1 verwendeten Begriffs "Schwachlastbelebungsstufe" und einem Abbau der Stickstoffracht bis auf maximal 10 mg/l (wie in der der DE 39 16 679 angegeben, vgl. Sp. 4, Z. 57) aus, so ergibt sich aufgrund dem Fachmann geläufiger Berechnungen, daß die erste biologische Reinigungsstufe noch relativ groß, nämlich für einen Stoßfaktor von f_{N} > 1 ausgelegt ist. Diese Berechnungen sind im Regelwerk Abwasser-Abfall der Abwassertechnischen Vereinigung (ATV) in Zusammenarbeit mit dem Verband kommunaler Städtereinigungsbetriebe (VKS), Arbeitsblatt A 131, Februar 1991 niedergelegt. Das Ergebnis f_{N} > 1 bedeutet, daß in der ersten Stufe mehr als der 24-Stunden-Mittelwert der Belastung abgebaut wird. Spitzenbelastungen im Ablauf von 10 mg/l NH₄-N, wie in der o.g. Druckschrift angegeben, bedeuten Mittelwerte von höchstens 3 mg/l. Aus der Tatsache, daß dieser Wert so niedrig ist, folgt, daß schon die Schwachlastbelebungsstufe für eine ausreichende Nitrifikation ausgelegt ist. Eine solche Größe ist erforderlich, wenn man die BSB-Belastung entsprechend niedrig halten will. Würde man aber darauf verzichten, die Schwachlastbelebungsstufe so auszulegen, daß sie die Spitzenbelastungen abbaut, müßte man auch eine höhere Reststickstoffracht im Ablauf in Kauf nehmen.

Nachteilig an dieser Auslegung ist also, daß die erste biologische Reinigungsstufe einen sehr hohen Raum- bzw. Flächenbedarf hat. Sie muß insbesondere deshalb relativ groß bemessen sein, weil man auch bei Spitzenbelastungen, also Belastungen, die über dem täglichen Durchschnittswert (24-Stunden-Mittel) liegen, heute sehr niedrig angesetzten Höchstwerte im Ablauf erreichen will.

Nachteilig an der bekannten Anordnung nach der DE 39 16 679 A1 ist ferner, daß innerhalb der ersten Reinigungsstufe von einer Nitrifikation auf eine Denitrifikation umgestellt werden muß. Dabei können sich die verschiedenen Biozonosen mischen. Ein solches Filter ist prozeßtechnisch schwierig zu handhaben, da in der Dentrifikationsstufe kein Sauerstoff anwesend sein darf.

Aufgabe der vorliegenden Erfindung ist es, die Anlage der eingangs genannten Art so zu verbessern, daß der Raumbedarf verringert wird. Außerdem sollen die weiteren beschriebenen Merkmale vermieden werden.

Diese Aufgabe wird erfindungsgemäß dadurch gelöst, daß in der ersten biologischen Reinigungsstufe die Kohlenstoffbelastung und zusätzlich höchstens die im 24-Stunden-Mittel anfallende Stickstoffbelastung (Stickstoff-Stoßfaktor f_{N} = 1,0) abgebaut wird und in der zweiten biologischen Reinigungsstufe die darüber hinausgehenden Stickstoffbelastung, insbesondere tageszeitlichen Spitzen (f_{N} > 1,0) abgebaut werden und dies auch bei niedrigen Temperaturen (< 12° C).

Zur Quantifizierung der Stickstoffbelastung soll also gelten:

Die Tagesfracht der Stickstoffbelastung des Rohabwassers wird registriert und über 24 Stunden gemittelt. Die Umsatzleistungen der biologischen Reinigungsstufen sind empirische Werte. Aus Tagesfracht und hydraulischem Durchsatz wird die Konzentration der Stickstoffbelastung im 24-Stunden-Mittel errechnet. Innerhalb eines Tages hat man jedoch z.T. erhebliche Frachtschwankungen um diesen mittleren Wert. Es gibt nach A 131 einen sog. Stickstoff-Stoßfaktor f_{N}, der definiert ist als Verhältnis von maximaler Zweistunden-Stickstoffbelastung zu mittlerer Stickstoffbelastung. Dieser Stoßfaktor schwankt erfahrungsgemäß, abhängig von der Anschlußgröße, von 1,5 bis 2,5.

Die erste biologische Reinigungsstufe wird also maximal für einen Stoßfaktor f_{N} = 1 bemessen. Die Bemessung erfolgt gemäß A 131 über das erforderliche Schlammalter, das wiederum eine Funktion der Bemessungstemperatur und der Größe des Belebungsbeckens ist.

Die Belastungsobergrenze der zweiten biologischen Reinigungsstufe wird ebenfalls empirisch ermittelt. Damit kann man die Bemessung der zweiten biologischen Reinigungsstufe ausrechnen, wenn man über die Bemessung der ersten biologischen Reinigungsstufe entschieden hat.

Die im Lauf des Tages auftretenden Stickstoff-Belastungsspitzen werden in der zweiten biologischen Reinigungsstufe abgebaut. Man kann, z.B. aus Platzgründen, die erfindungsgemäße Anlage auch so bemessen, daß in der ersten biologischen Reinigungsstufe nur die Kohlenstoff-Belastung und in der zweiten biologischen Reinigungsstufe die gesamte Stickstoffbelastung abgebaut wird. Zwischen diesen beiden Eckwerten kann die erfindungsgemäße Anlage je nach den örtlichen Gegebenheiten optimal bemessen werden.

Aus dieser Optimierung der beiden Reinigungsstufen folgt eine extrem kompakte Bauweise, so daß die Platzersparnis im Vergleich zu einer einstufigen Anlage nach A 131 bis zu 50% beträgt. Die erfindungsgemäße Anlage weist ferner eine große Prozeßstabilität auf. Diese stabile Prozeßführung ist möglich, weil die Filterstufen völlig entkoppelt sind und jede Filterstufe nur eine ganz bestimmte Aufgabe erfüllt. Damit ist auch eine Mischung der Biozönosen ausgeschlossen.

Gleichzeitig entspricht die Reinigungsleistung der erfindungsgemäßen Anlage den strengen Anforderungen des Gesetzgebers. Die Ablaufkonzentration an N_{anorg} kann infolge der weitgehenden Nitrifikation durch die Dosiermenge der externen Kohlenstoffquelle in der nachgeschalteten Denitrifikationsstufe auf das gewünschte Maß eingestellt werden. So sind im Ablauf für N_{anorg} weniger als 5mg/l erreichbar. Darüberhinaus sind CSB-Elimination, Suspensaelimination und Keimreduktion verbessert. Diese guten Ablaufwerte werden aufgrund der präzisen Dimensionierung der beiden Reinigungsstufen und auch bei schwankendem Rohwasserdaten erzielt, d.h. im Tagesverlauf auftretende Spitzenbelastungen werden zuverlässig abgebaut. Das bedeutet insgesamt eine bessere Anpassung an die örtliche Situation und an den Tagesgang der Belastung bei minimiertem Raumbedarf der Anlage.

Ein weiterer Vorteil der erfindungsgemäßen Anlage ist die rationellere Ausnützung der Betriebsmittel. Die Filter sind im Aufwärtsstrom betrieben, d.h. das zu behandelnde Abwasser strömt von unten nach oben und im Gleichstrom mit der Prozeßluft bzw. der Kohlenstoffquelle durch die Filterstufen. Das führt z.B. zu einer verbesserten O₂-Ausnützung (bis zu 40-50%). Damit besitzt die erfindungsgemäße Anlage einen geringeren Energiebedarf, was zu niedrigeren Betriebskosten führt. Aufgrund der zuverlässig guten Ablaufwerte verringert sich außerdem die finanzielle Belastung durch die Abwasserabgabe.

Vorteilhafterweise ist vor einer der Filterstufen, wahlweise auch vor beiden Filterstufen, die Fällung und Flockung von Phosphat vorgesehen. Fällung und Flockung können in einer vor dem biologischen Filter angeordneten Koagulationskammer oder in Form einer Rohrkoagulation, d.h. in der Zulaufleitung, erfolgen. Das zudosierte Fällmittel kann je nach Abwasserbeschaffenheit wahlweise eine Fe- oder Al-Verbindung, bevorzugt eine basische Al-Verbindung sein. Zur Optimierung des alkalischen Fällmittelbedarfs kann je nach Abwasserbeschaffenheit vor der Fällmittelzugabe eine Säuredosierung vorgesehen sein. Das ausgeflockte Phosphat wird von den Filtern zurückgehalten. So kann man in der Filteranlage eine Phosphateliminierung herbeiführen. Die Verwendung eines basischen Fällmittels empfiehlt sich zur Erhöhung der Säurekapazität, um die Nitrifikationsbedingungen zu verbessern. Durch diese Maßnahmen können sowohl zu niedrige als auch zu hohe pH-Werte im Zulauf korrigiert werden.

Die Filterstufen weisen vorzugsweise mehrere parallel geschaltete biologische Filter auf. Diese modulare Bauweise ermöglicht es, den Betrieb der Anlage an den Abwasserzufluß anzupassen. Beispielsweise können bei Trockenwasserzufluß (1/2 bis 1/3 des Regenwasserzuflusses) ein oder mehrere Filter abgeschaltet werden. Dies führt zu einer weiteren Senkung der Betriebskosten.

Eine weitere vorteilhafte Ausführungsform ist eine zusätzliche Denitrifikationsanlage innerhalb der ersten biologischen Reinigungsstufe und die zusätzliche Rezirkulation eines Teils des in der ersten Filterstufe entstandenen NO₃. Dies empfiehlt sich, weil in der ersten biologischen Reinigungsstufe die Kohlenstoffquelle für die Denitrifikanten noch im Abwasser enthalten ist, während sie in der zweiten biologischen Reinigungsstufe zugeführt werden muß.

Eine weitere vorteilhafte Weiterbildung ist die Optimierung der Spülabwasserbehandlung. Das Spülabwasser kann entweder vor die Gesamtanlage, zur Vorklärung, geschickt werden, oder es kann separat behandelt werden, z.B. durch Flotation, um die Linie der Behandlungsstufen zu entlasten. Anschließend wird es vor eine Filterstufe geführt. Die Anlage wird damit nicht so stark hydraulisch belastet wie beim Rückführen zur Vorklärung.

Wird das Spülwasser dem Klarwasser der ersten Filterstufe entnommen, so dient das behandelte Spülabwasser dazu, den Zulauf zur zweiten Filterstufe wieder aufzufüllen, so daß sie gleichmäßig belastet wird. Diese Art des Betriebs bezeichnet man als Speicherbeckenbetrieb.

Der Abbau der Phosphat- und CSB-Belastung kann in eine vorgeschalteten mechanischen Reinigungsstufe, in der diese Inhaltsstoffe durch Fällung/Flockung und Sedimentation entfernt werden, noch verbessert werden.

Die erste biologische Reinigungsstufe kann eine nach den erfindungsgemäßen Bemessungsregeln bemessene SchwachlastBelebungsstufe nach A 131 sein.

Besonders vorteilhaft ist es, auch die erste biologische Reinigungsstufe mit biologischen Filtern auszurüsten. Bei einer solchen kompakten Anlage erfüllen zusätzliche biologische Filterstufen die Aufgabe der konventionellen Belebungsbecken. Der Platzbedarf kann gegenüber einer konventionellen Anlage nach A 131 um bis zu 75% verringert werden. Durch die geschlossene Bauweise der Reaktoren wird außerdem die Emissionsbelastung (Geruch, Lärm) merklich reduziert.

Wenn in der ersten biologischen Reinigungsstufe eine Denitrifikationsanlage mit NO₃-Rezirkulation in Form einer Filterstufe vorgesehen ist, kann diese vorteilhafterweise so ausgelegt sein, daß sie eine untere anaerobe Zone mit Rohwasserzufluß für den biologischen Phosphatabbau und eine obere anoxische Zone mit NO₃-Zufluß für die Denitrifikation aufweist.

Eine weitere vorteilhafte Weiterbildung dieser Filterstufe sieht vor, daß beide Zonen wahlweise belüftet werden können und die ganze Filterstufe somit auf aeroben Kohlenstoffabbau umgestellt werden kann. Das ist z.B. dann von Vorteil, wenn bei erhöhtem Regenwasserzufluß die Rezirkulation abgeschaltet werden muß, um die zulässige Strömungsgeschwindigkeit in der Filterstufe nicht zu überschreiten.

Der biologische Filter einer solcher Filterstufe weist einen Düsenboden auf, auf dem körniges Filtermaterial aufgeschüttet ist. Unter dem Düsenboden ist der Rohwasserzufluß und über dem Düsenboden ein wahlweise zuschaltbarer Prozeßluftverteiler mit Prozeßluftdüsen für den Sauerstoffeintrag angeordnet. Weiter oberhalb des Düsenbodens mündet der NO₃-Zulauf in einen Rezirkulationsverteiler, welcher wahlweise auf dem Düsenboden oder weiter oben im Filtermaterial angeordnet ist.

Der erfindungsgemäße biologische Filter kann so betrieben werden, daß die Zone unterhalb des Rezirkulationsverteilers anaerob und die Zone darüber anoxisch ist, so daß jeweils Phosphat bzw. Nitrat biologisch abgebaut werden. Der biologische Filter kann auch vom Düsenboden ausgehend belüftet und damit aerob betrieben werden, so daß die Kohlenstoffbelastung des Abwassers sowie Phosphat biologisch abgebaut werden.

Im folgenden werden zwei Ausführungsbeispiele der erfindungsgemäßen Anlage sowie ein Ausführungsbeispiel des erfindungsgemäßen biologischen Filters unter Bezugnahme auf die beiliegenden Zeichnungen näher beschrieben. Es zeigen:
- Fig. 1: schematisch ein erstes Ausführungsbeispiel einer erfindungsgemäßen Anlage zur Reinigung von Abwasser;
- Fig. 2: schematisch ein zweites Ausführungsbeispiel einer erfindungsgemäßen Anlage zur Reinigung von Abwasser;
- Fig. 3: eine detailliertere Darstellung eines biologischen Filters;
- Fig. 4: einen erfindungsgemäßen alternierend betreibbaren biologischen Filter.

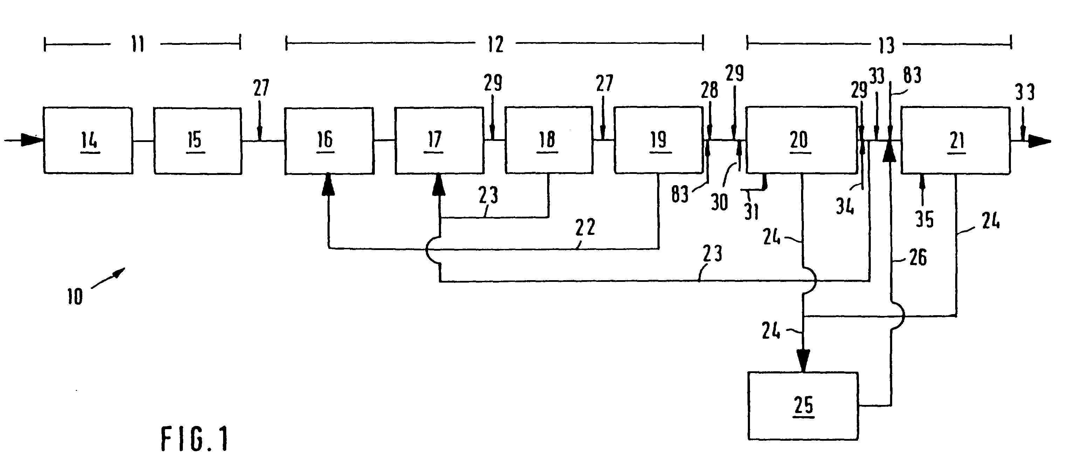

Die in Fig. 1 gezeigte Anlage 10 setzt sich zusammen aus einer mechanischen Reinigungsstufe 11, einer ersten biologischen Reinigungsstufe 12 und einer zweiten biologischen Reinigungsstufe 13. Die mechanische Reinigungsstufe 11 besteht aus einem Rechen mit Sand- und Fettfang 14 und einem Vorklärbecken 15. Die Vorklärung kann jedoch auch auf andere Weise, z.B. durch einen Schrägwabenklärer erfolgen. Die erste biologische Reinigungsstufe 12 ist eine für einen Stoßfaktor f_{N}=1 bemessene konventionelle Belebungsstufe nach A 131 mit einem Belebungsbecken 16 für den anaeroben biologischen Phosphatabbau, einem Denitrifikationsbecken 17 für den anoxischen NO₃-N- und Kohlenstoffabbau, einem Belebungsbecken 18 für den aeroben NH₄-N- und Kohlenstoffabbau und einem Nachklärbecken 19. Das Belebungsbecken 16 und das Denitrifikationsbecken 17 sind nicht zwingend. Vom Nachklärbecken 19 wird der abgezogene Rücklaufschlamm über eine Leitung 22 wieder in das Belebungsbecken 16 geführt. Ein Teil des nitrathaltigen Ablaufs des Belebungsbeckens 18 wird über eine Leitung 23 zum Denitrifikationsbecken 17 rezirkuliert.

An das Nachklärbecken 19 schließt sich die zweite biologische Reinigungsstufe 13 an, die aus einer ersten Filterstufe 20 zur aeroben Nitrifikation und einer zweiten Filterstufe 21 zur anoxischen Denitrifikation besteht. Die erste Filterstufe 20 wird über die Leitung 31 mit Prozeßluft versorgt. Die zweite Filterstufe 21 wird über die Leitung 35 mit Methanol beschickt. Ein Teil des nitrathaltigen Ablaufs der ersten Filterstufe 20 wird über die Leitung 23 zum Denitrifikationsbecken 17 rezirkuliert. In beide Filterstufen 20, 21 münden außerdem in Fig. 1 nicht gezeigte Leitungen für Filterspülwasser und Filterspülluft. Das bei der Rückspülung anfallende Spülabwasser wird über eine Leitung 24 abgeführt und separat in 25 durch Flotation gereinigt. Das gereinigte Spülabwasser wird über eine Leitung 26 dem Zulauf der zweiten Filterstufe 21 zugeführt.

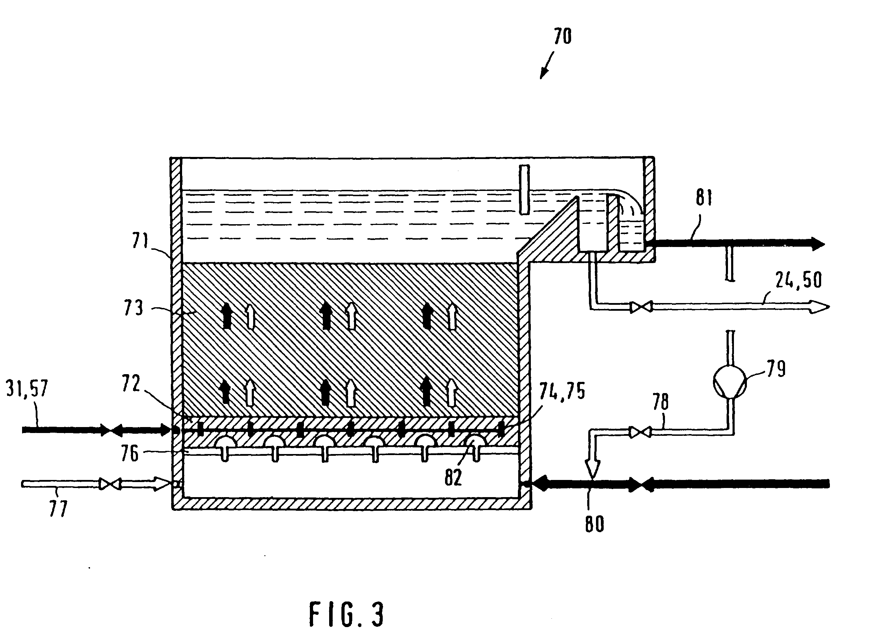

Jede Filterstufe 20, 21 besteht aus sechs parallel geschalteten biologischen Filtern 70. Ein solcher biologischer Filter 70 ist in Fig. 3 genauer dargestellt.

In einem Gehäuse 71 ist auf einem Düsenboden 76 als Filtermaterial 73 ein körniger Blähton mit einem Kornspektrum von 3-6 mm bis zu einer Schütthöhe von 4m eingefüllt. Es sind aber auch andere Tone, Basalte, Laven, Quarzsand oder Aktivkohle mit einer Körnung von etwa 1-8 mm geeignet. Geeignetes Filtermaterial 73 ist abriebsfest und besitzt ein ausreichendes spezifisches Gewicht (1,5g/cm³) sowie eine große spezifische Oberfläche. Das Filtermaterial 73 liegt auf einer zweistufig abgestuften Stützkiesschicht 72. Direkt auf dem Düsenboden liegt eine etwa 15 cm hohe Stützkiesschicht mit einer Körnung von 16-32 mm, darauf liegt eine etwa 15 cm hohe Stützkiesschicht mit einer Körnung von 8-16 mm, darauf liegt das eigentliche Filtermaterial. In die Stützkiesschicht 72, direkt auf dem Düsenboden 76, ist ein Prozeßluftverteiler 74 mit Prozeßluftdüsen 75 (Warenzeichen "Oxazur"), eingelassen. Es sind 25-50 Düsen/m² vorgesehen. In den Düsenboden 76 selbst sind Spüldüsen 82 eingeschraubt, und zwar 50-60 Düsen/m².

Der biologische Filter 70 wird im Aufstrom betrieben. Das Rohabwasser aus dem Rohabwasserzulauf 80 und das Prozeßgas bzw. die Kohlenstoffquelle aus der Leitung 31 bzw. 57 befinden sich im Gleichstrom.

Der Bewuchs des Filtermaterials 73 wird reguliert durch die Rahmenbedingungen, d.h. durch die Art des Betriebs (Sauerstoffgehalt, pH, organische Kohlenstoffquelle etc.) wird ein Selektionsdruck ausgeübt, der das Wachstum der gewünschten Biozönose begünstigt. Die Mikroorganismen werden teilweise aus den Nachklärbecken 19 gespült, treten im Zulauf in die biologischen Filter 70 ein und bleiben am Filtermaterial 73 hängen. Da im Zulauf immer auch Mikroorganismen sind, ist die Biozönose flexibel und kann sich veränderten Bedingungen anpassen.

In der ersten Filterstufe 20 darf die Kohlenstoffbelastung nicht zu hoch sein, weil sonst ihre Leistung reduziert wird. Es muß Sauerstoff für die Nitrifikanten vorhanden sein. Der Lufteintrag mit einer Geschwindigkeit von 4-15 m/h wird nach dem theoretischen Sauerstoffbedarf eingestellt, den man stöchiometrisch berechnen kann. Die Sauerstoffausnutzung ist ungewöhnlich hoch und beträgt bis zu 40-50%. Die Sauerstoffzufuhr darf bei Betrieb der Filter nur kurzzeitig unterbrochen werden, sonst können die Nitrifikanten geschädigt werden.

Typischerweise beträgt die Kohlenstoffbelastung im Zulauf der zweiten biologischen Reinigungsstufe 13 etwa 20-60 mg BSB₅/l. Der Sauerstofftransfer beträgt zwischen 55 und 80 g O₂/Nm³, das entspricht einer Ausnutzung von 20-50%.

Die Einstellung der Rahmenbedingungen unterliegt einer gewissen Selbstregulation. Es liegt normalerweise der Schwankungsbereich vor, der für die Mikroorganismen optimal ist. Dieser Bereich stellt sich von selbst ein.

Bei extremen Schwankungen z.B. des pH-Werts wird aber von außen eingegriffen, allerdings normalerweise in der ersten biologischen Reinigungsstufe 12. Falls erforderlich, kann man natürlich auch vor der ersten Filterstufe 20 eingreifen, z.B. wenn die Säurekapazität (Carbonathärte) im Zulauf nicht ausreicht, um bei einer gegebenen NH₄-N-Fracht die vollständige Nitrifikation zu gewährleisten; dann empfiehlt sich eine pH-Korrektur mit Kalk, Carbonat oder NaOH. Eine andere Möglichkeit ist, zum Fällen von Phosphat ein alkalisches Fällmittel, z.B. Na-Aluminat, zu benutzen. Bei kommunalem Abwasser reicht die Säurekapazität aber in der Regel aus.

Die Temperatur wird gar nicht reguliert, sondern man nimmt hin, daß die Mikroorganismen im Winter weniger aktiv sind.
Man geht aber davon aus, daß die immobilisierten Mikroorganismen etwas weniger temperaturempfindlich sind als die im Belebungsbecken suspendierten Mikroorganismen. Auch Betriebstemperaturen von < 10°C sind akzeptabel.

Die Wirkung des biologischen Filters 70 beruht also zum einen auf einer klassischen Filtrationswirkung (Feststoffrückhalt), zum anderen auf der Nitrifikation bzw. Denitrifikation durch die auf dem Filtermaterial 73 immobilisierte Biomasse. Gleichzeitg wird bei der Nitrifikation der Restkohlenstoff abgebaut, der noch auf den Filter zuläuft.

Die Nitrifikationsleistung beträgt typischerweise etwa 0,5 bis 1,5 kg NH₄-Nₒₓ/m³d, kann jedoch auch darüberliegen. Das hängt von den örtlichen Gegebenheiten, insbesondere von der Abwasserqualität ab. Der NH₄-N-Gehalt im Ablauf beträgt unabhängig von tageszeitlichen Schwankungen ca. unter 2mg/l.

Die biologischen Filter 70 der Filterstufen 20,21 werden regelmäßig nach Zeitvorgabe oder bei Druckverlust oder Trübung zurückgespült. Die Spülung erfolgt vollautomatisch mit programmierbarer Steuerung. Es ist ein Zeitintervall eingestellt, meist 24 bis 72 h. Wenn in dieser Zeit der Druckverlust des Filters einen Grenzwert nicht überschreitet, wird erst nach Ablauf des Zeitintervalls gespült. Überschreitet der Druckverlust oder die Trübung im biologischen Filter 70 jedoch einen Grenzwert, so wird er bei der Grenzwertüberschreitung in Rückspülung genommen.

Es werden nie alle biologischen Filter 70 einer Filterstufe 20,21 gleichzeitig gespült, um den Wasserfluß nicht zu unterbrechen.

Die Spülung ist eine kombinierte Luft-Wasserspülung mit anschließender Klarspülung. Die Spülluft wird über die Leitung 77 zugeführt. Das Spülwasser wird von einer Pumpe 79 über die Leitung 78 dem Rohabwasserzulauf 80 zugeführt. Das Spülwasser wird in der Regel aus dem Ablauf der zweiten Filterstufe entnommen. Der Verbrauch beträgt etwa 3-8% des abfließenden Klarwassers, d.h. 7-10m³/m². Sie besteht aus den Verfahrensschritten Schnellabsenkung, Auflockerung, Luft-Wasser-Spülung und Klarspülung.

Wenn man nun wieder zu Fig. 1 zurückgeht, sieht man, daß im Ausführungsbeispiel die Fällmittelzugabe 29 für die Rest-Phosphatfällung im Zulauf zum Belebungsbecken 18 und zur ersten Filterstufe 20 erfolgt. Eine Säurezugabe 83 ist jeweils von der ersten Filterstufe 20 und der zweiten Filterstufe 21 vorgesehen. Das zudosierte Fällmittel kann wahlweise eine Fe- oder Al-Verbindung sein. Das ausgeflockte Phosphat wird abgezogen bzw. vom Filtermaterial 73 zurückgehalten. Um z.B. P_{gesamt}-Ablaufwerte von < 0,8 mg/l zu erzielen, braucht man bei Zulaufwerten von 1,5 mg/l ca. 3-4,5 mg Fe³⁺/l.

Der Ablauf aus der ersten Filterstufe 20 wird der zweiten Filterstufe 21 zugeführt. Die Belastung beträgt etwa 50 mg Nitrat /l. Die zweite Filterstufe 21 ist wie die erste Filterstufe 20 aufgebaut, mit der Ausnahme, daß sie nicht belüftet, sondern mit über die Leitung 35 mit einer Kohlenstoffquelle beschickt wird. Als Kohlenstoffquelle wird etwa 2,5 kg Methanol/kg NO₃-N zugeführt. Andere Kohlenstoffquellen wie Essigsäure oder Ethanol sind auch geeignet, ebenso Produkte aus der Schlammbehandlung oder Trübwasser.

Man beobachtet im Ablauf der zweiten Filterstufe 21 keine Ammoniumbildung durch Nitratammonifikation. Außerdem beobachtet man Nitritbildung nur zu Beginn der Anfahrphase. Später werden die Nitritbildner wohl von den Denitrifikanten überwachsen und man beobachtet kaum Nitritbildung mehr.

Die Denitrifikationsleistung beträgt bis 2-5 kg/m³d. Im Ablauf beobachtet man 1-7 mg/l NO₃-N.

Der Suspensagehalt im Ablauf der zweiten Filterstufe 21 beträgt kleiner 10 mg/l und bleibt auch bei einer Strömungsgeschwindigkeit bis 10-12 m/h so niedrig. Die Keimzahl wird in der ersten Filterstufe 20 z.B. von 5.10⁶/ml auf 5.10⁵/ml und in der zweiten Filterstufe 21 nochmals auf 1.10⁵/ml reduziert.

Aus Fig. 1 sind weiterhin folgende Meßeinrichtungen zur Steuerung des Betriebsablaufs ersichtlich. Im Zulauf der ersten Filterstufe 20 erfolgt eine NH₄-N-Messung 30. Damit wird in Verbindung mit einer nicht gezeigten Durchflußmessung die Prozeßluftzufuhr 31 gesteuert. Es erfolgt weiterhin eine P-Messung 28, mit der die die Fällmittelzugabe 29 gesteuert wird. Im Zulauf der zweiten Filterstufe 21 erfolgt eine NO₃-Messung 34, die die Methanol zuführung 35 steuert. Die Durchflußmessung steuert ferner die Zu- und Abschaltung einzelner biologischer Filter 70; eine ebenfalls nicht gezeigte Druckmessung unter den Düsenböden 76 der biologischen Filter 70 steuert zusammen mit einer Trübungsmessung 33 in den Abläufen beider Filterstufen 20,21 die Spülung.

Die NH₄-N- und P-Messung kann natürlich auch im Ablauf der ersten Filterstufe 20 erfolgen.

So kann man die Anlage 10 wirtschaftlich betreiben. Man kann auch über Integrationsrechnung die Filterlaufzeit beeinflussen. Wenn man die Beladungskapazität eines biologischen Filters 70 kennt, weiß man ziemlich genau, nach welcher Zeit der Filter gespült werden muß. So kann man die Zeitvorgabe bei der Spülung optimal einstellen.

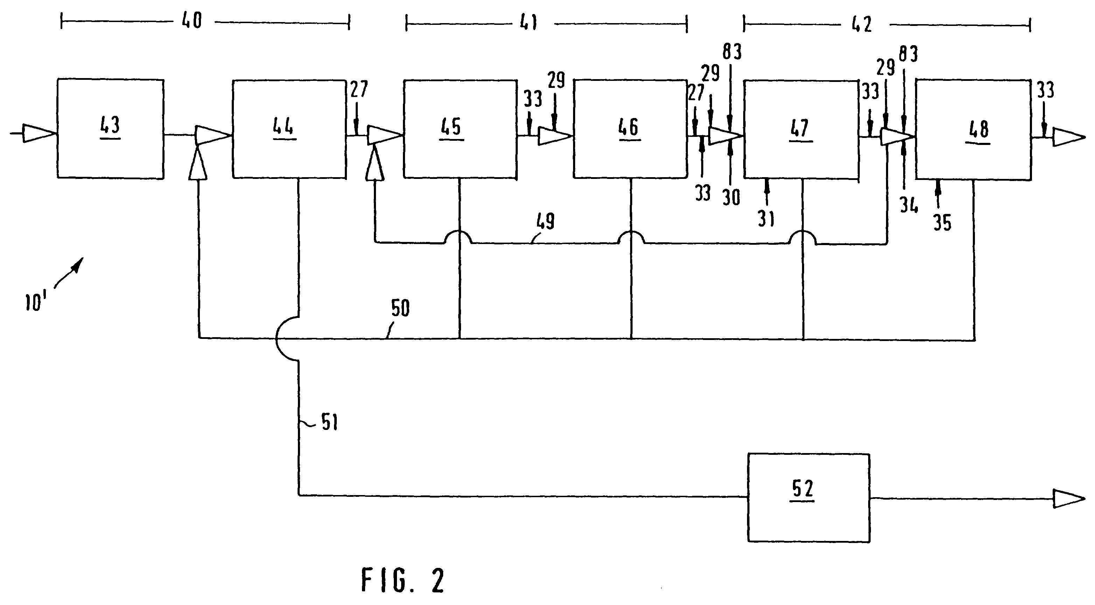

In Fig. 2 ist ein zweites Ausführungsbeispiel einer erfindungsgemäßen Anlage 10' dargestellt. Auch diese Anlage weist eine mechanische Reinigungsstufe 40, eine erste biologische Reinigungsstufe 41 und eine zweite biologische Reinigungsstufe 42 auf.

Die mechanische Reinigungsstufe 40 besteht aus einem Rechen mit Sand- und Fettfang 43 und einer Fällungs-, Flockungs- und Sedimentationseinheit 44, in der CSB und Phosphat gefällt, ausgeflockt und sedimentiert werden. Letztere ist hier ein Wabenschrägklärer, der vertikal in drei Zonen unterteilt: Zudosieren der Fällungschemikalie, Flockung und Sedimentation an einem wabenförmigen Einsatz. Der einfallende Schlamm wird über die Leitung 51 abgezogen und einer separaten Behandlung 52 zugeführt.

Die hydraulische Belastung dieser Stufe kann bis zu 20 m/h betragen.

Eine solche Sedimentationsstufe 44 bietet sich an, wenn wenig Platz zur Verfügung steht, weil sie kompakter als eine klassische Vorklärung ist.

Stattdessen kann selbstverständlich auch ein Vorklärbecken und/oder ein Belebungsbecken für den biologischen Phosphatabbau vorgesehen sein. Wichtig ist, daß überhaupt eine Vorklärung stattfindet.

In der ersten biologischen Reinigungsstufe 41 sind die Belebungsbecken der konventionellen Belebungsstufe durch entsprechende Filterstufen 45,46 ersetzt. Der Aufbau dieser Filterstufen ist im Prinzip wie für die Filterstufen 20,21 des ersten Ausführungsbeispiels beschrieben.

Die erste Filterstufe 45 entspricht in ihrer Funktion dem Denitrifizierungsbecken 17. Kohlenstoff und Nitrat werden parallel abgebaut. Über eine Leitung 49 wird Nitrat aus dem Ablauf der nachgeschalteten Nitrifikationsfiltern rezirkuliert. Die Rezirkulation muß abgeschaltet werden, wenn der Rohwasserzufluß zu groß wird, z.B. bei Regenwetter, um die zulässige Strömungsgeschwindigkeit von 2-11 m/h in der Filterstufe 45 nicht zu überschreiten. Zur Kontrolle ist daher im Zulauf eine nicht gezeigte Durchflußmessung vorgesehen.

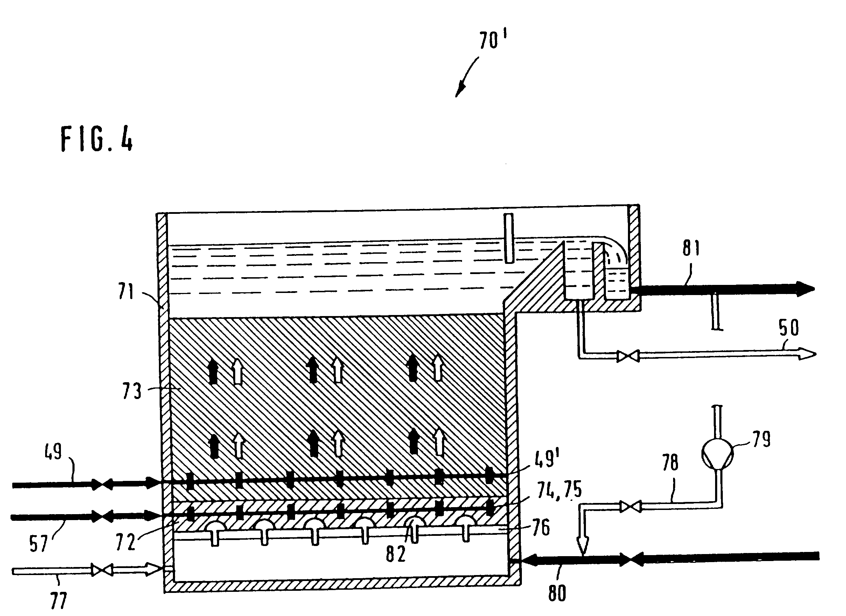

Die biologischen Filter der Filterstufe 45 sind aufgebaut wie oben beschrieben. Sie können aber auch so aufgebaut sein, wie es in Fig. 4 dargestellt ist.

Der in Fig. 4 gezeigte biologische Filter 70' weist im Unterschied zum bereits beschriebenen biologischen Filter 70 zusätzlich einen Rezirkulationsverteiler 49' auf, der im Filtermaterial 73 eingebettet ist. Unter dem Düsenboden 76 befindet sich die Rohwasserzufuhr 80 und die Spülluftzufuhr 77. Über dem Düsenboden 76 befindet sich die Prozeßluftzufuhr 57. Wenn diese abgeschaltet und die Nitratzufuhr 49 offen ist, ist der Bereich zwischen dem Düsenboden 76 und dem Rezirkulationsverteiler 49' anaerob, und der Bereich über dem Rezirkulationsverteiler 49' ist anoxisch, so daß die Denitrifikation stattfindet. Ist die Prozeßluftzufuhr 57 offen und die Nitratzufuhr 49 geschlossen, so ist der ganze biologische Filter 70' aerob, und es werden Kohlenstoff und Phosphat biologisch abgebaut. Der biologische Filter 70' wird also alternierend betrieben.

Die zweite Filterstufe 46 der ersten biologischen Reinigungsstufe 41 entspricht dem Belebungsbecken 18. Der noch vorhandene Kohlenstoff wird abgebaut. Parallel dazu wird mit der Nitrifikation begonnen. Die zweite Filterstufe 46 ist ständig belüftet.

An die Filterstufe 46 schließt sich die zweite biologische Reinigungsstufe 42 an, die in Aufbau und Funktion der zweiten biologischen Reinigungsstufe 13 des ersten Ausführungsbeispiels entspricht. In der ersten Filterstufe 47 wird das verbleibende NH₄-N zu NO₃-N nitrifiziert. Auch hier gibt es eine Rezirkulation 49 zum Zulauf der Filterstufe 45. Die Rezirkulation wird wie beschrieben in Abhängigkeit von der zulaufenden Wassermenge gesteuert. In der zweiten Filterstufe 48 findet die Umsetzung von NO₃-N zu N₂ statt.

Die Rückspülung der biologischen Filter 70, 70' findet wie oben beschrieben statt. Das Filterspülabwasser wird über die Leitung 50 zum Kopf der Anlage 10', d.h. zur sedimentationsstufe 44 geführt. Eine separate Behandlung, z.B. durch Flotation, ist aber auch denkbar, ebenso wie der Speicherbeckenbetrieb.

Die Anlage 10' besitzt im wesentlichen dieselben Meßeinrichtungen wie die Anlage 10 des ersten Ausführungsbeispiels. Auf diese Beschreibung wird Bezug genommen. Gleiche Meßeinrichtungen besitzen gleiche Bezugszeichen.

Zusammenfassend ist festzuhalten, daß die erfindungsgemäße Anlage zur Reinigung von Abwasser 10, 10' bei optimaler Bemessung 40-75% weniger Platz beansprucht als eine einstufige Belebungsanlage nach A 131 mit vergleichbaren Reinigungszielen. Die Reinigungsleistung der verschiedenen Filterstufen ist unabhängig von tageszeitlichen Schwankungen sehr gut und beträgt für die Feststoffbeladung 4-7 kg/m³, für den BSB-Abbau 6 kg/m³d, für den CSB-Abbau 12 kg/m³d, für die Nitrifikation 1-1,5 kg/m³d, für die Denitrifikation 2-2,5 kg/m³d bei einer Bemessungstemperatur von 10°C.

Die Reinigungsleistung der erfindungsgemäßen Anlage erlaubt Ablaufwerte von:
N_{anorg} < 5 mg/l,
BSB < 10 mg/l,
AFS < 10 mg/l,
CSB < 50 mg/l,
P_{gesamt} < 0,8 mg/l.

## Patentansprüche

1. Verfahren zur Reinigung von Abwasser, insbesondere kommunalem Abwasser mit einer mechanischen Reinigungsstufe (11, 40), einer ersten biologischen Reinigungsstufe (12, 41) und einer zweiten biologischen Reinigungsstufe (13, 42), bei der die zweite biologische Reinigungsstufe (13, 42) eine biologische Filteranlage ist, die eine Filterstufe für die Nitrifikation (20, 47) und eine in Strömungsrichtung nachgeschaltete Filterstufe für die Denitrifikation (21, 48) aufweist, wobei die Filterstufen mindestens einen biologischen Filter (70) aufweisen, **dadurch gekennzeichnet**, daß in der ersten biologischen Reinigungsstufe (12, 41) die Kohlenstoffbelastung und zusätzlich höchstens die im 24-Stunden-Mittel anfallende Stickstoffbelastung (Stickstoff-Stoßfaktor f_{N} = 1,0) abgebaut wird und in der zweiten biologischen Reinigungsstufe (13, 42) die darüber hinausgehenden Stickstoffbelastungen, insbesondere tageszeitlichen Spitzen (f_{N} > 1,0) abgebaut werden und dies auch bei niedrigen Temperaturen (< 12° C).

2. Verfahren nach Anspruch 1, dadurch gekennzeichnet, daß innerhalb der zweiten biologischen Reinigungsstufe (13, 42) ferner eine Eliminierung von Phosphat durch Fällung und/oder Flockung vorgesehen ist.

3. Verfahren nach Anspruch 1, dadurch gekennzeichnet, daß die Filterstufen durch parallel geschaltete biologische Filter (70) gebildet werden.

4. Verfahren nach Anspruch 1 oder einem der folgenden, dadurch gekennzeichnet, daß in der ersten biologischen Reinigungsstufe (12, 41) eine Denitrifikation (17, 45) erfolgt, und daß ein Teil des Ablaufs der ersten Filterstufe der zweiten biologischen Reinigungsstufe (13, 42) in den Bereich (17, 45) zurückgeführt wird, in dem innerhalb der ersten biologischen Reinigungsstufe die Denitrifikation erfolgt.

5. Verfahren nach Anspruch 1 oder einem der folgenden, dadurch gekennzeichnet, daß das bei der Spülung der Filterstufen (20, 21; 47, 48), die die zweite biologische Reinigungsstufe bilden, anfallende Spülwasser getrennt gereinigt wird.

6. Verfahren nach Anspruch 1 oder einem der folgenden, dadurch gekennzeichnet, daß in der mechanischen Reinigungsstufe (11, 40) Phosphat und CSB durch Fällung und/oder Flockung eliminiert werden.

7. Verfahren nach Anspruch 1 oder einem der folgenden, dadurch gekennzeichnet, daß die erste biologische Reinigungsstufe (12) als Reinsauerstoff-Belebungsstufe ausgebildet ist.

8. Verfahren nach Anspruch 1 oder einem der folgenden, dadurch gekennzeichnet, daß die erste biologische Reinigungsstufe (41) eine biologische Filteranlage ist, die in Aufwärtsströmung betrieben wird, sowohl eine chemisch-physikalische als auch eine biologische Reinigung bewirkt, und mindestens eine Filterstufe (45) für Denitrifikation und Kohlenstoffabbau und mindestens eine Filterstufe (46) für Kohlenstoffabbau und Nitrifikation aufweist, wobei die Filterstufen (45, 46) mindestens ein biologisches Filter (70) aufweisen.

9. Vorrichtung zur Durchführung des Verfahrens nach Anspruch 1 mit einer mechanischen Reinigungsstufe (40) einer ersten biologischen Reinigungsstufe (41) und einer zweiten biologischen Reinigungsstufe (42), welche eine biologische Filteranlage ist mit einer ersten Filterstufe (47) und einer in Strömungsrichtung nachgeschalteten zweiten Filterstufe (48), die je mindestens einen biologischen Filter (70) aufweisen, dadurch gekennzeichnet, daß die erste biologische Reinigungsstufe (41) eine erste Filterstufe (45) und eine zweite Filterstufe (46) mit je mindestens einem biologischen Filter (70, 70') aufweist, wobei der biologische Filter (70') der ersten Filterstufe in einen anaeroben Bereich für die biologische Phosphatelimination und einen anoxischen Bereich für die Denitrifikation aufgeteilt ist.

10. Vorrichtung nach Anspruch 9, mit einem Gehäuse (71), einem Düsenboden (76), einem oberhalb des Düsenbodens (76) angeordneten Prozeßluftverteiler (74) mit Prozeßluftdüsen (75), wobei über dem Düsenboden (76) körniges Filtermaterial (73) aufgeschüttet ist, dadurch gekennzeichnet, daß über dem Düsenboden (76) ein Rezirkulationsverteiler (49') angeordnet ist.

## Claims

1. Process for purification of waste water, in particular communal waste water, comprising a mechanical purification stage (11, 40), a first biological purification stage (12, 41) and a second biological purification stage (13, 42), in which the second biological purification stage (13, 42) is a biological filter plant having a filter stage (20, 47) for the nitrification and a filter stage (21, 47) for the denitrification connected downstream in the flow direction, the filter stages having at least one biological filter (70), characterized in that, in the first biological purification stage (12, 41), the carbon load and, as a maximum, the average nitrogen load collected in 24 hours (nitrogen surge factor f_{N} = 1.0) is additionally decomposed and, in the second biological purification stage (13, 42), the nitrogen loads exceeding the latter, in particular daytime peaks (f_{N} > 1.0), are decomposed and this takes place even at low temperatures (< 12°C).

2. Process according to Claim 1, characterized in that, furthermore, an elimination of phosphate by precipitation and/or flocculation is provided within the second biological purification stage (13, 42).

3. Process according to Claim 1, characterized in that the filter stages are formed by biological filters (70) connected in parallel.

4. Process according to Claim 1 or one of the subsequent claims, characterized in that a denitrification (17, 45) is carried out in the first biological purification stage (12, 41) and in that some of the outflow of the first filter stage of the second biological purification stage (13, 42) is fed back into the region (17, 45) in which denitrification takes place within the first biological purification stage.

5. Process according to Claim 1 or one of the subsequent claims, characterized in that the rinse water collected during the rinsing of the filter stages (20, 21; 47, 48) which form the second biological purification stage is purified separately.

6. Process according to Claim 1 or one of the subsequent claims, characterized in that phosphate and COD are eliminated by precipitation and/or flocculation in the mechanical purification stage (11, 40).

7. Process according to Claim 1 or one of the subsequent claims, characterized in that the first biological purification stage (12) is designed as pure-oxygen activation stage.

8. Process according to Claim 1 or one of the subsequent claims, characterized in that the first biological purification stage (41) is a biological filter plant which is operated with upward flow, which effects both a chemico-physical and a biological purification, and which comprises at least one filter stage (45) for denitrification and carbon decomposition and at least one filter stage (46) for carbon decomposition and nitrification, the filter stages (45, 46) having at least one biological filter (70).

9. Device for carrying out the method according to Claim 1, comprising a mechanical purification stage (40), a first biological purification stage (41) and a second biological purification stage (42) which is a biological filter plant having a first filter stage (47) and a second filter stage (48) connected downstream in the flow direction, which each comprise at least one biological filter (70), characterized in that the first biological purification stage (41) has a first filter stage (45) and a second filter stage (46), each comprising at least one biological filter (70, 70'), the biological filter (70') of the first filter stage being divided into an anaerobic region for the biological phosphate elimination and an anoxic region for the denitrification.

10. Device according to Claim 9, having a housing (71), a nozzle-carrying base (76), and a processing-air distributor (74) which is disposed above the nozzle-carrying base (76) and comprises processing-air nozzles (75), granular filter material (73) being deposited above the nozzle-carrying base (76), characterized in that a recirculation distributor (49') is disposed above the nozzle-carrying base (76).

## Revendications

1. Procédé de purification des eaux usées, en particulier des eaux usées communales, avec un étage de purification mécanique (11, 40), un premier étage de purification biologique (12, 41) et un second étage de purification biologique (13, 42), le second étage de purification biologique (13, 42) étant une installation de filtrage biologique comportant un étage de filtre de nitrification (20, 47) et un étage de filtre de dénitrification (21, 48) disposé en aval dans le sens de l'écoulement, les étages de filtre étant dotés d'au moins un filtre biologique (70), caractérisé en ce que, dans le premier étage de purification biologique (12, 41), s'effectue la dégradation de la charge en carbone, et en plus, au maximum, de la charge moyenne en azote produite sur 24 heures (facteur de pointe de l'azote f_{N} = 1,0) et que dans le second étage de purification biologique (13, 42) s'effectue la dégradation des charges en azote en excédent, en particulier les pointes journalières (f_{N} > 1,0), et ceci même aux basses températures (< 12 C).

2. Procédé selon la revendication 1, caractérisé en ce que, dans le second étage de purification biologique (13, 42), l'élimination du phosphate est également prévue, par précipitation et/ou par floculation.

3. Procédé selon la revendication 1, caractérisé en ce que les étages de filtre sont constitués par des filtres biologiques (70) branchés en parallèle.

4. Procédé selon la revendication 1 ou l'une des suivantes, caractérisé en ce que, dans le premier étage de purification biologique (12, 41), une dénitrification (17, 45) est effectuée et en ce qu'une partie de la sortie du premier étage de filtres est renvoyée sur le second étage de purification biologique (13, 42) dans la partie (17, 45) du premier étage de purification biologique où s'effectue la dénitrification.

5. Procédé selon la revendication 1 ou l'une des suivantes, caractérisé en ce que, lors du rinçage des étages de filtre (20, 21 ; 47, 48) qui constituent le second étage de purification biologique, l'eau de rinçage produite est purifiée séparément.

6. Procédé selon la revendication 1 ou l'une des suivantes, caractérisé en ce que, dans l'étage de purification mécanique (11, 40), l'élimination du phosphate et du CSB est effectuée par précipitation et/ou floculation .

7. Procédé selon la revendication 1 ou l'une des suivantes, caractérisé en ce que le premier étage de purification biologique (12) se présente sous la forme d'un étage d'activation à l'oxygène pur.

8. Procédé selon la revendication 1 ou l'une des suivantes, caractérisé en ce que le premier étage de purification biologique (41) est une installation de filtrage biologique fonctionnant à contre-courant, qui a également une action de purification aussi bien physico-chimique que biologique et qui comporte au moins un étage de filtre (45) pour la dénitrification et la dégradation du carbone et au moins un étage de filtre (46) pour la dégradation du carbone et la nitrification, les étages de filtre (45, 46) comportant au moins un filtre biologique (70).

9. Dispositif pour mettre en oeuvre le procédé selon la revendication 1, avec un étage de purification mécanique (40), un premier étage de purification biologique (41) et un second étage de purification biologique (42) qui est une installation de filtrage biologique et qui comporte un premier étage de filtre (47) et un second étage de filtre (48) disposé en aval dans le sens de l'écoulement, dotés chacun d'au moins un filtre biologique (70), caractérisé en ce que, le premier étage de purification biologique (41) comporte un premier étage de filtre (45) et un second étage de filtre (46) dotés chacun d'au moins un filtre biologique (70, 70'), le filtre biologique (70') du premier étage de filtre étant divisé en une zone anaérobie pour l'élimination biologique du phosphate et une zone anoxique pour la dénitrification.

10. Dispositif selon la revendication 9, comportant une enveloppe, (71) un fond à buses (76), un répartiteur d'air processus (74) disposé au-dessus du fond à buses (76) et doté de buses d'air processus (75), une matière filtrante en grains (73) étant répandue sur le fond à buses (76), caractérisé en ce qu'un répartiteur de recirculation (49') est disposé au-dessus du fond à buses (76).
